# EUROPÄISCHE PATENTSCHRIFT

(11) **EP 1 938 407 B1**
(45) Veröffentlichungstag und Bekanntmachung des Hinweises auf die Patenterteilung: **17.11.2010**
(21) Anmeldenummer: 06792052.0
(22) Anmeldetag: 14.09.2006
(51) Int. Cl.: H01M 8/02, H01M 8/24, H01M 2/08

(54) **VERWENDUNG EINES ELASTOMERBLENDS ALS MATERIAL IM EINSATZBEREICH DER BRENNSTOFFZELLE**
USE OF A ELASTOMER BLEND AS A MATERIAL IN THE INSERTION AREA OF THE FUEL CELLS
UTILISATION D'UN MELANGE ELASTOMERE COMME MATERIAU DANS LE DOMAINE DES PILES A COMBUSTIBLE

(30) Priorität: 21.09.2005 DE 102005045184
(43) Veröffentlichungstag der Anmeldung: 02.07.2008
(73) Patentinhaber: Carl Freudenberg KG, 69469 Weinheim (DE)
(72) Erfinder: ADLER, Matthias, 64646 Heppenheim (DE); BIERINGER, Ruth, 67240 Bobenheim-Roxheim (DE); VIOL, Michael, 69121 Heidelberg (DE)
(86) Internationale Anmeldenummer: PCT/EP2006/008934
(87) Internationale Veröffentlichungsnummer: WO 2007/033789

(56) Entgegenhaltungen:
- EP-A- 1 146 082
- EP-A1- 1 464 670
- US-B2- 6 875 534

## Beschreibung

### Technisches Gebiet

Die Erfindung betrifft die Verwendung eines Elastomerblends als Material im Einsatzbereich der Brennstoffzelle, insbesondere der Direkt-Methanol-Brennstoffzelle.

### Stand der Technik

Das Dokument EP 1 075 034 A1 beschreibt die Anwendung von Polyisobutylen oder Perfluoropolyether, der über Hydrosilylierung vernetzt, als Dichtungsmaterial in der Brennstoffzelle.

Das Dokument US 6,743,862 B2 offenbart eine vernetzbare Kautschukkomposition, vorzugsweise aus Ethylen-Propylen-Dien-Monomer, mit einer mindestens zwei SiH-Gruppen enthaltenden Verbindung und optional mit einem Platinkatalysator. Zudem wird die Verwendung dieser Kautschukkomposition als Dichtungsmaterial beschrieben.

Aus dem Dokument EP 1 277 804 A1 sind Kompositionen bekannt aus einem Vinylpolymer mit zumindest einer über Hydrosilylierung vernetzbaren Alkenylgruppe, einer Verbindung mit einer hydrosilylgruppenhaltigen Komponente, einem Hydrosilylierungskatalysator sowie einer aliphatischen ungesättigten Verbindung mit einem Molekulargewicht von nicht größer als 600 g/mol.

Die nach dem Dokument EP 0 344 380 B1 bekannten über Schwefel oder Peroxid vernetzten Blends weisen einen hochungestättigten Kautschuk und zwei Ethylen/Propylen/nichtkonjugierte Dien-Terpolymere mit unterschiedlichen Molekulargewichten auf.

Die klassische Vernetzungschemie von Dienkautschuken, wie eine Vernetzung über Schwefel oder Peroxid, führt zu einem hohen Anteil an flüchtigen Bestandteilen im vernetzten Material und zu Produkten, deren chemische Eigenschaften deutlich unter den Werten des Einzelcompounds liegen können. Ursache hierfür kann eine schlechte Vermischung und eine ungenügende Covulkanisation sein.

In dem Dokument US 6,875,534 B2 wird die Verwendung eines Blends aus Polyisobutylen und Silikon, das über Hydrosilylierung vernetzt, als Dichtung in der Brennstoffzelle beschrieben. Silikone besitzen bei feuchter Umgebung, wie zum Beispiel in der Brennstoffzelle, und bei längerem Einsatz unter Druck und erhöhter Temperatur schlechte Druckverformungsreste.

Das Dokument EP 1 146 082 A1 offenbart ein Verfahren zur Vernetzung eines Blends eines thermoplastischen Harzes und eines ungesättigten Kautschuks, der Isobutylen-Isopren-Divinylbenzol umfasst, wobei das thermoplastische Harz inert gegenüber dem Kautschuk, dem Hydrosilylierungsmittel und dem Hydrosilylierungskatalysator ist.

### Darstellung der Erfindung

Der Erfindung liegt die Aufgabe zu Grunde, die Verwendung eines schwefelfreien und emissionsarmen Elastomerblends vorzuschlagen, das die Eigenschaften von verschiedenen Kautschuken besitzt, und dessen mechanische Eigenschaften, insbesondere in Bezug auf Härte, Zugfestigkeit, Bruchdehnung, Gasdurchlässigkeit (Permeation) und/oder Druckverformungsrest (DVR), gegenüber den Einzelcompounds, das heißt gegenüber Mischungen oder Verbindungen, die nur einen Kautschuktyp aufweisen, verbessert sind, und das eine verbesserte Temperatur- und Medienbeständigkeit aufweist.

Die Lösung der gestellten Aufgabe wird mit den Merkmalen des Anspruchs 1 erreicht.

Für die Verwendung als Material im Einsatzbereich der Brennstoffzelle umfasst das Elastomerblend erfindungsgemäß einen Kautschuk (A) mit mindestens zwei über Hydrosilylierung vernetzbaren funktionellen Gruppen, mindestens einen anderen Kautschuk (B) mit mindestens zwei über Hydrosilylierung vernetzbaren funktionellen Gruppen, wobei sich der Kautschuk (B) vom Kautschuk (A) chemisch unterscheidet, als Vernetzer (C) ein Hydrosiloxan oder Hydrosiloxanderivat oder ein Gemisch aus mehreren Hydrosiloxanen oder - derivaten, die im Mittel mindestens zwei SiH-Gruppen pro Molekül aufweisen, ein Hydrosilylierungs-Katalysatorsystem (D) und zumindest einen Füllstoff (E).

Dabei ist das Elastomerblend bevorzugt im Wesentlichen silikonfrei und/oder im Wesentlichen thermoplastfrei, das heißt, das Elastomerblend umfasst bevorzugt gleich oder weniger als 30 phr Silikon, besonders bevorzugt weniger als 20 phr Silikon, und/oder bevorzugt weniger als 30 Gew.-% eines Thermoplasten. Besonders bevorzugt sind die Elastomerblends vollständig silikonfrei und/oder vollständig thermoplastfrei.

Die Elastomerblends haben angesichts dessen, dass sie nahezu kein oder kein Silikon aufweisen, den Vorteil, dass die Permeation von Fluiden oder Gasen durch deren Werkstoffe gegenüber Silikonkautschuk wesentlich geringer ist. Die bleibende Verformung nach Belastung, insbesondere unter erhöhten Temperaturen über 80°C, wie sie durch den Druckverformungsrest gekennzeichnet werden, ist bei diesen Gummis, das heißt den Elastomerblends aus den vernetzten Kautschuken (A) und (B), besonders gering. Diese Eigenschaft zeichnet sie beispielsweise besonders gegenüber thermoplastischen Elastomerblends aus, die einen thermoplastischen Kunststoff umfassen. Da die physikalischen Netzstellen bei einer Verformung abgleiten können, ist die bleibende Verformung bei thermoplastischen Elastomeren höher als bei Gummi.

Die Unteransprüche stellen vorteilhafte Weiterbildungen des Erfindungsgegenstandes dar.

In bevorzugter Ausgestaltung umfasst das Elastomerblend zusätzlich ein über Hydrosilylierung vernetzbares Coagens (F) und/oder zumindest ein Additiv (G).

Die mechanischen Eigenschaften, insbesondere der Druckverformungsrest (DVR), von über Hydrosilylierung vernetzten Elastomeren aus Polymeren, die nur zwei funktionelle Gruppen enthalten, ist meist sehr stark vom Verhältnis der funktionellen Gruppen zu den SiH-Gruppen der Hydrosiloxane abhängig. Daher sind Elastomerblends bevorzugt, die im Mittel aller Kautschuke mehr als zwei über Hydrosilylierung vernetzbare funktionelle Gruppen aufweisen.

In bevorzugter Ausgestaltung des Elastomerblends weist der Kautschuk (A) mehr als zwei über Hydrosilylierung vernetzbare funktionelle Gruppen auf, und der zumindest eine Kautschuk (B) weist zwei über Hydrosilylierung vernetzbare funktionelle Gruppen auf, vorzugsweise zwei endständige Vinylgruppen.

Für eine Verbesserung der mechanischen Eigenschaften des Elastomerblends, beispielsweise in Bezug auf Druckverformungsrest (DVR), Bruchdehnung, und/oder Zugfestigkeit Gasdurchlässigkeit (Permeation), insbesondere gegenüber den Einzelcompounds sind vorteilhafterweise
- 20 bis 95 phr des Kautschuks (A),
- 80 bis 5 phr des zumindest einen Kautschuks (B),
- eine Menge des Vernetzers (C), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E), für nicht magnetische Füllstoffe bevorzugt 10 bis 200 phr, für magnetische oder magnetisierbare bevorzugt 200 bis 600 phr, eingesetzt.

Für eine Verbesserung der mechanischen Eigenschaften des Elastomerblends, beispielsweise in Bezug auf den Druckverformungsrest (DVR) bei 100°C in Luft, sind insbesondere gegenüber den Einzelcompounds vorteilhafterweise
- 50 bis 95 phr des Kautschuks (A),
- 50 bis 5 phr des zumindest einen Kautschuks (B),
- eine Menge des Vernetzers (C), wobei das Verhältnis der SiH-Gruppen zu den
   über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E), für nicht magnetische Füllstoffe bevorzugt 10 bis 200 phr, für magnetische oder magnetisierbare bevorzugt 200 bis 600 phr, eingesetzt.

In bevorzugter Ausgestaltung umfasst das Elastomerblend zusätzlich
- 0,1 bis 30 phr, bevorzugt 1 bis 10 phr, des Coagens (F) und/oder
- 0,1 bis 20 phr des zumindest einen Additivs (G).

Die Abkürzung phr bedeutet parts per hundred rubber, gibt also die Gewichtsanteile pro hundert Gewichtsteile Kautschuk an. Die angegebenen

Bereiche der einzelnen Komponenten erlauben eine ganz spezifische Anpassung des Elastomerblends an die gewünschten Eigenschaften.

Überraschend gute mechanische Eigenschaften, insbesondere besonders niedrige Druckverformumgsrestwerte (DVR), insbesondere bei 100°C in Luft, werden erzielt bei Elastomerblends, die vorzugsweise 50 bis 70 phr des Kautschuks (A) und 50 bis 30 phr des Kautschuks (B) aufweisen.

Überraschend gute Eigenschaften, insbesondere besonders gute Zugfestigkeitswerte und/oder vergleichsweise geringe Gasdurchlässigkeitswerte, werden erzielt bei Elastomerblends, die vorzugsweise 20 bis 50 phr des Kautschuks (A) und 80 bis 50 phr des Kautschuks (B) aufweisen.

Überraschend gute Lagerungsbeständigkeiten bei Temperaturen größer 100°C, insbesondere bei 120°C bis 150°C, in Luft und/oder niedrige Druckverformungswerte (DVR) bei Temperaturen größer 100°C, insbesondere bei 120°C bis 150°C, nach Tagen und/oder Wochen in Luft, und/oder niedrige Druckverformungswerte (DVR), insbesondere nach bis zu mehreren Wochen bei Brennstoffzellbedingungen im wässrig-sauren Medium, werden erreicht bei Elastomerblends, die vorzugsweise 20 bis 50 phr des Kautschuks (A) und 80 bis 50 phr des Kautschuks (B), ganz besonders bevorzugt 20 phr des Kautschuks (A) und 80 phr des Kautschuks (B), aufweisen.

Als bevorzugte Elastomerblends haben sich solche erwiesen, bei denen der Kautschuk (A) ausgewählt ist aus Ethylen-Propylen-Dien-Kautschuk (EPDM), wobei als Dien bevorzugt ein Norbomenderivat mit einer Vinylgruppe, bevorzugt 5-Vinyl-2-norbonen, eingesetzt ist, aus
Isobutylen-Isopren-Divinylbenzol-Kautschuk (IIR-Terpolymer), Isobutylen-Isopren-Kautschuk (IIR), Butadien-Kautschuk (BR), Styrol-Butadien-Kautschuk (SBR), Styrol-Isopren-Kautschuk (SIR), Isopren-Butadien-Kautschuk (IBR), Isopren-Kautschuk (IR), Acrylnitril-Butadien-Kautschuk (NBR), Chloropren-Kautschuk (CR), Acrylat-Kautschuk (ACM) oder aus teilweise hydriertem Kautschuk aus Butadien-Kautschuk (BR), Styrol-Butadien-Kautschuk (SBR), Isopren-Butadien-Kautschuk (IBR), Isopren-Kautschuk (IR), Acrylnitril-Butadien-Kautschuk (NBR) oder aus funktionalisiertem Kautschuk, wie zum Beispiel mit Maleinsäureanhydrid oder -derivaten, oder aus mit Vinylgruppen funktionalisiertem Perfluoropolyether-Kautschuk.

Ein bevorzugter Kautschuk (B) ist ausgewählt aus einem der zu Kautschuk (A) genannten Kautschuke und/oder aus Polyisobutylen-Kautschuk (PIB) mit zwei Vinylgruppen, wobei die Kautschuke (A) und (B) in einem jeweiligen Elastomerblend nicht übereinstimmen, also zumindest zwei chemisch verschiedene Kautschuke mit unterschiedlichen Eigenschaften darstellen.

Ein besonders bevorzugtes Elastomerblend weist als Kautschuk (A) Ethylen-Propylen-Dien-Kautschuk (EPDM) mit einer Vinylgruppe im Dien und als Kautschuk (B) Polyisobutylen (PIB) mit zwei Vinylgruppen auf.

Vorteilhafterweise beträgt das mittlere Molekulargewicht der Kautschuke (A) und (B) zwischen 5000 und 100000 g/mol, bevorzugt zwischen 5000 und 60000 g/mol.

Als Vernetzer (C) sind vorzugsweise eingesetzt
- eine SiH-enthaltende Verbindung der Formel (I): 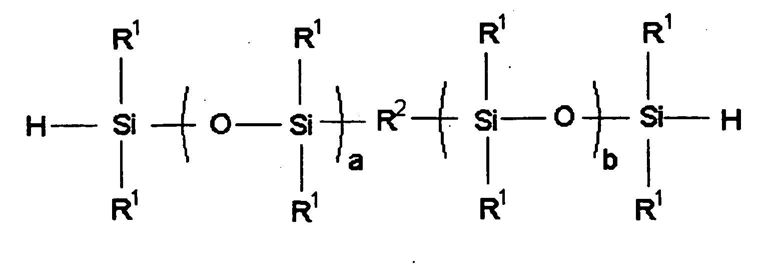 wobei R¹ für eine gesättigte Kohlenwasserstoffgruppe oder für eine aromatische Kohlenwasserstoffgruppe steht, die monovalent ist, 1 bis 10 Kohlenstoffatome hat und substituiert oder unsubstituiert ist, wobei a für ganzzahlige Werte von 0 bis 20 und b für ganzzahlige Werte von 0 bis 20 steht, sowie R² für eine divalente organische Gruppe mit 1 bis 30 Kohlenstoffatomen oder Sauerstoffatomen steht,
- eine SiH-enthaltende Verbindung der Formel (II): 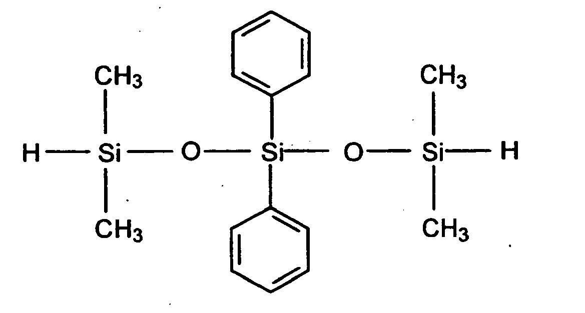 und/oder
- eine SiH-enthaltende Verbindung der Formel (III):

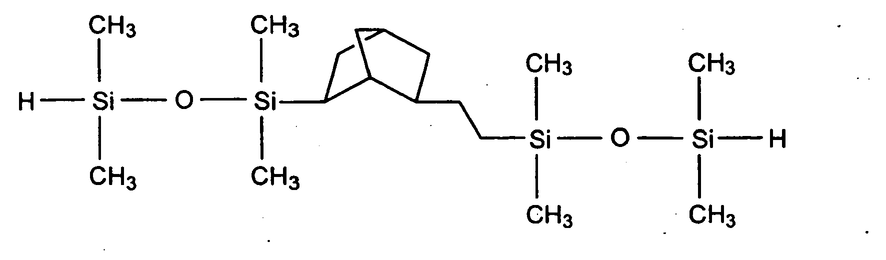

Der Vernetzer (C) ist besonders bevorzugt ausgewählt aus Poly(dimethylsiloxan-co-methylhydro-siloxan), Tris(dimethylsilyoxy)phenylsilan, Bis(dimethylsilyloxy)diphenylsilan, Polyphenyl(dimethylhydrosiloxy)-siloxan, Methylhydrosiloxanphenylmethylsiloxan-Copolymer, Methylhydrosiloxan-alkylmethylsiloxan-Copolymer, Polyalkylhydrosiloxan, Methylhydrosiloxan-diphenylsiloxan-alkylmethylsiloxan-Copolymer und/oder aus Polyphenylmethylsiloxan-methylhydrosiloxan.

Das Hydrosilylierungs-Katalysatorsystem (D) ist vorzugsweise ausgewählt aus Platin(0)-1,3-Divinyl-1,1,3,3,-tetramethyldisiloxan-Komplex, Hexachloroplatinsäure, Dichloro(1,5-cyclooctadien)platin(II), Dichloro(dicyclopentadienyl)platin(II), Tetrakis(triphenylphosphin)platin(0), Chloro(1,5-cyclooctadien)rhodium(I)dimer, Chlorotris(triphenylphosphin)rhodium(I) und/oder Dichloro(1,5-cyclooctadien)palladium(II) gegebenenfalls in Kombination mit einem Kinetikregler ausgewählt aus Dialkylmaleat, insbesondere Dimethylmaleat, 1,3,5,7-Tetramethyl-1,3,5,7-tetravinylcyclosiloxan, 2-Methyl-3-butin-2-ol und/oder 1-Ethinylcyclohexanol.

Der zumindest eine Füllstoff (E) ist vorteilhafterweise ausgewählt aus Fumace-, Flamm- und/oder Channel-Ruß, Kieselsäure, Metalloxid, Metallhydroxid, Carbonat, Silikat, oberflächenmodifizierter bzw. hydrophobierter, gefällter und/oder pyrogener Kieselsäure, oberflächenmodifiziertem Metalloxid, oberflächenmodifiziertem Metallhydroxid, oberflächenmodifiziertem Carbonat, wie Kreide oder Dolomit, oberflächenmodifiziertem Silikat, wie Kaolin, calciniertes Kaolin, Talkum, Quarzmehl, Kieselerde, Schichtsilikat, Glaskugeln, Fasern und/oder organischem Füllstoff, wie beispielsweise Holzmehl und/oder Cellulose.

Das Coagens (F) ist vorteilhafterweise ausgewählt aus 2,4,6-Tris(allyloxy)-1,3,5-triazin (TAC), Triallylisocyanurat (TAIC), 1,2-Polybutadien, 1,2-Polybutadienderivaten, Allylethern, insbesondere Trimethylolpropan-diallylether, Allylalkoholestern, insbesondere Diallylphtalaten, Diacrylaten, Triacrylaten, insbesondere Trimethylpropantriacrylat, Dimethacrylaten und/oder Trimethacrylaten, insbesondere Trimethylolpropantrimethacrylat (TRIM), Triallylphosphonsäureestern und/oder Butadien-Styrol-Copolymeren mit mindestens zwei über Hydrosilylierung an die Kautschuke (A) und/oder (B) anbindenden funktionellen Gruppen.

Als Additiv (G) finden
- Alterungsschutzmittel, beispielsweise UV-Absorber, UV-Screener, Hydroxybenzophenonderivate, Benzotriazoderivate oder Triazinderivate,
- Antioxidantien, zum Beispiel gehinderte Phenole, Lactone oder Phosphite,
- Ozonschutzmittel, zum Beispiel paraffinische Wachse,
- Flammschutzmittel,
- Hydrolyseschutzmittel, wie Carbodiimidderivate,
- Haftvermittler, wie Silane mit über Hydrosilylierung an die Kautschukmatrix anbindenden funktionellen Gruppen, zum Beispiel mit Vinyltrimethoxysilan, Vinyltriethoxysilan, mit funktionalisierten Kautschuken modifizierte Polymere, wie Maleinsäurederivate, zum Beispiel Maleinsäurueanhydrid,
- Entformungsmittel bzw. Mittel zur Reduzierung der Bauteilklebrigkeit, wie zum Beispiel Wachse, Fettsäuresalze, Polysiloxane, Polysiloxane mit über Hydrosilylierung an die Kautschukmatrix anbindenden funktionellen Gruppen und/oder
- Farbstoffe und/oder Pigmente
- Weichmacher und/oder
- Verarbeitungshilfen

### Verwendung.

Bei dem Verfahren zur Herstellung eines derartigen Elastomerblends werden beim Vernetzen keine Nebenprodukte erzeugt, die aufwendig entfernt werden müssen. Es werden keine Spaltprodukte freigesetzt, die migrieren können und problematisch für die Anwendungen im Brennstoffzellenbereich sein können. Des Weiteren geschieht die Vernetzung mit einer vergleichsweise geringen Menge eines Hydrosilylierungs-Katalysatorsystems schneller als bei konventionellen Materialien.

Zur Herstellung des dargestellten Elastomerblends werden zunächst die Kautschuke (A) und (B), der zumindest eine Füllstoff (E) und gegebenenfalls das Coagens (F) und/oder das zumindest eine Additiv (G) gemischt, der Vernetzer (C) und das Hydrosilylierungs-Katalysatorsystem (D) als Einkomponentensystem oder als Zweikomponentensystem hinzugegeben sowie alle Komponenten gemischt.

Beim Einkomponentensystem erfolgt die Zugabe des Vernetzers (C) und des Hydrosilylierungs-Katalysatorsystems (D) zu den vorgenannten übrigen Komponenten in einem System bzw. Behälter. Beim Zweikomponentensystem hingegen werden der Vernetzer (C) und das Hydrosilylierungs-Katalysatorsystem (D) getrennt voneinander, also in zwei Systemen oder Behältern, jeweils zunächst mit einem Teil einer Mischung aus den übrigen Komponenten bis zur homogenen Verteilung gemischt, bevor beide Systeme, das heißt die Mischung mit dem Vernetzer (C) und die Mischung mit dem Hydrosilylierungs-Katalysatorsystem (D), zusammengeführt werden, und alle Komponenten gemischt werden. Das Zweikomponentensystem hat den Vorteil, dass die beiden Mischungen, in denen der Vernetzer (C) und das Hydrosilylierungs-Katalysatorsystem (D) getrennt voneinander sind, länger lagerbar sind als eine Mischung, die sowohl den Vernetzer (C) als auch das Hydrosilylierungs-Katalysatorsystem (D) enthält.

Anschließend wird das Produkt durch ein Spritzguß- bzw. (Liquid)Injection-Moulding-Verfahren ((L)IM), durch Pressen bzw. ein Compression-Moulding-Verfahren (CM), durch ein Transfer-Moulding-Verfahren (TM) oder durch ein davon jeweils abgeleitetes Verfahren, ein Druckverfahren, wie zum Beispiel Siebdruck, durch Raupenauftrag, Tauchen oder Sprühen verarbeitet.

Die vorgenannten Elastomerblends finden Verwendung als Material im Einsatzbereich der Brennstoffzelle, insbesondere der Direkt-Methanol-Brennstoffzelle.

Vorzugsweise sind die Elastomerblends dabei als Material für Dichtungen, wie lose oder integrierte Dichtungen, wie zum Beispiel O-Ringe oder Nutringe, Klebedichtungen, Softmetalldichtungen oder Imprägnierungen, für Beschichtungen, Membranen oder Klebemassen von Schläuchen, Ventilen, Pumpen, Filtern, Befeuchtem, Reformern, Vorratsgefäßen (Tanks), Schwingungsdämpfern, für Beschichtungen von Geweben und/oder Vliesstoffen eingesetzt.

Eine besonders vorteilhafte Anwendung der Elastomerblends liegt in der Verwendung als Dichtung für Brennstoffzellenstacks in Form von zum Beispiel losen unprofilierten oder profilierten Dichtungen. Vorzugsweise werden die erfindungsgemäßen Elastomerblends auch als auf einer Bipolarplatte, einer Membran, einer Gasdiffusionsschicht oder in einer Membran-Elektrodeneinheit integrierte unprofilierte oder profilierte Dichtungen verwendet.

### Ausführung der Erfindung

Im Folgenden werden bevorzugte Ausführungsbeispiele dieser Erfindung beschrieben.

Die Kautschuke (A) und (B), ein Füllstoff (E), sowie gegebenenfalls ein Coagens (F) werden in einem Mischer, einem SpeedMixer DAC 400 FVZ der Firma Hausschild & Co. KG, bei Temperaturen zwischen 30 und 60°C bis zu einer homogenen Verteilung der Komponenten gemischt. Anschließend werden ein Vernetzer (C) und ein Hydrosilylierungs-Katalysatorsystem (D) zugegeben, und die Mischung wird weiter bis zu einer homogenen Verteilung der Komponenten gemischt.

Aus dieser Mischung werden unter Vulkanisationsbedingungen bei 150°C beispielsweise in einer Presse 2 mm dicke Platten gepresst.

Als Kautschuk (A) wird Ethylen-Propylen-5-Vinyl-2-norbonen-Kautschuk von der Firma Mitsui Chemicals mit einem Norbonengehalt von 5,3 Gewichts-% und einem mittleren Molekulargewicht von 31000 g/mol eingesetzt (Mitsui-EPDM).

Als Kautschuk (B) wird Polyisobutylen (PIB) mit zwei Vinylgruppen von der Firma Kaneka mit einem mittleren Molekulargewicht von 16000 glmol verwendet (EPION-PIB (EP 400)).
Als Vernetzer (C) wird Poly(dimethylsiloxan-co-methylhydro-siloxan) von der Firma Kaneka eingesetzt (CR 300). CR 300 hat mehr als 3 SiH-Gruppen pro Molekül und ist daher zum Aufbau von Netzwerken für difunktionelle Vinyl-Kautschuke, wie Polyisobutylen mit zwei Vinylgruppen, besonders gut geeignet.

Als Hydrosilylierungs-Katalysatorsystem (D) wird ein sogenannter Karstedt-Katalysator eingesetzt, nämlich Platin(0)-1,3-Divinyl-1,1,3,3,-tetramethyldisiloxan-Komplex, der 5%ig in Xylol gelöst und in Kombination mit Dimethylmaleat als Kinetikregler eingesetzt wird.

Als Füllstoff (E) wird hydrophobierte pyrogene Kieselsäure der Firma Degussa eingesetzt (Aerosil R8200). Hydrophobierte bzw. hydrohobe Kieselsäuren lassen sich besonders gut in unpolare Kautschuke einarbeiten und bewirken eine geringere Viskositätserhöhung sowie einen besseren Druckverformungsrest (DVR) im Vergleich zu unmodifizierten Kieselsäuren.

Die Erfindung lässt sich an Hand der folgenden Beispiele, die in den Tabellen sowie in den Figuren dargestellt sind, besser verstehen.

In den Beispielen der Elastomerblends und den Vergleichsbeispielen werden die folgenden Testmethoden verwendet, um die Eigenschaften der Elastomerblends im Vergleich zu den Einzelcompounds mit Mitsui-EPDM oder mit EPION-PIB (EP400) als alleinigem Kautschuktyp zu bestimmen:

| | |
|---|---|
| Härte [Shore A] nach | DIN 53505, |
| Druckverformungsrest (DVR) [%] nach | DIN ISO 815 |

(25% Deformation; 24h bei 100°C bzw. 24h/ 70 h/ 1008h bei 120°C bzw. 24h/ 70h/ 336h bei 150°C in Luft bzw.1008h bei 90°C in 2,5 M Methanol/Wasserlösung, angesäuert mit Ameisensäure),

### Permeation von Stickstoff

| | |
|---|---|
| [cm³(NTP) mm/ m²h bar] nach (bei 80°C), | DIN 53536 |
| Bruchdehnung [%] und Zugfestigkeit [MPa] bei Raumtemperatur nach | DIN 53504-S2 und |
| relative Änderung der Bruchdehnung und der Zugfestigkeit [%] nach (24h/ 70 h/ 1008h bei 120°C bzw. 24h/ 70h/ 1008h bei 150°C in Luft). | DIN 53508 |

**Tabelle I**

| **Beispiel** | Einzel- compound 1 | **Elastomer-blend 1** | **Elastomer-** **blend 2** | **Elastomer-** **blend 3** | Einzel- compound 2 |
|---|---|---|---|---|---|
| **Kautschuk (A): Mitsui-EPDM [phr]** | 0 | **20** | **50** | **80** | 100 |
| **Kautschuk (B): EPION-PIB (EP400)** [phr] | 100 | **80** | **50** | **20** | 0 |
| Vernetzer (C): CR-300 [phr] | 4 | 4 | 4 | 4 | 4 |
| Kat.-System (D): ≈ 450 ppm Kat./Regler [µl] | 56/ 36 | 56/ 36 | 56/ 36 | 56/ 36 | 56/ 36 |
| Füllstoff (E): Aerosil R8200 [phr] | 20 | 20 | 20 | 20 | 20 |
| **Härte [Shore A]** | **21** | **30** | **31** | **31** | **24** |
| **DVR in Luft** | **23** | | | | 17 |
| **100°C, 24h [%]** (Figur 1) | | **18** | **12** | **14** | |
| **Bruchdehnung [%]** RT (Figur 2) | 246 | **226** | **179** | **137** | 147 |
| **Zugfestigkeit [MPa]** RT (Figur 3) | 1,6 | **1,7** | **1,5** | **1,1** | 0,9 |
| **Permeation, 80°C** [cm³(NTP) mm/ **m²h bar]** (Figur 4) | 17 | ≈ 29 | 47 | 88 | 114 |

- In Figur 1: ist der Verlauf des Druckverformungsrests (DVR) (24h bei 100°C in Luft),
- in Figur 2: ist der Verlauf der Bruchdehnung (bei Raumtemperatur),
- in Figur 3: ist der Verlauf der Zugfestigkeit (bei Raumtemperatur) und
- in Figur 4: ist der Verlauf der Gasdurchlässigkeit (Permeation)
jeweils in Abhängigkeit von der Zusammensetzung verschiedener Elastomerblends mit Mitsui-EPDM als Kautschuk (A) und EPION-PIB (EP400) als Kautschuk (B) gezeigt.

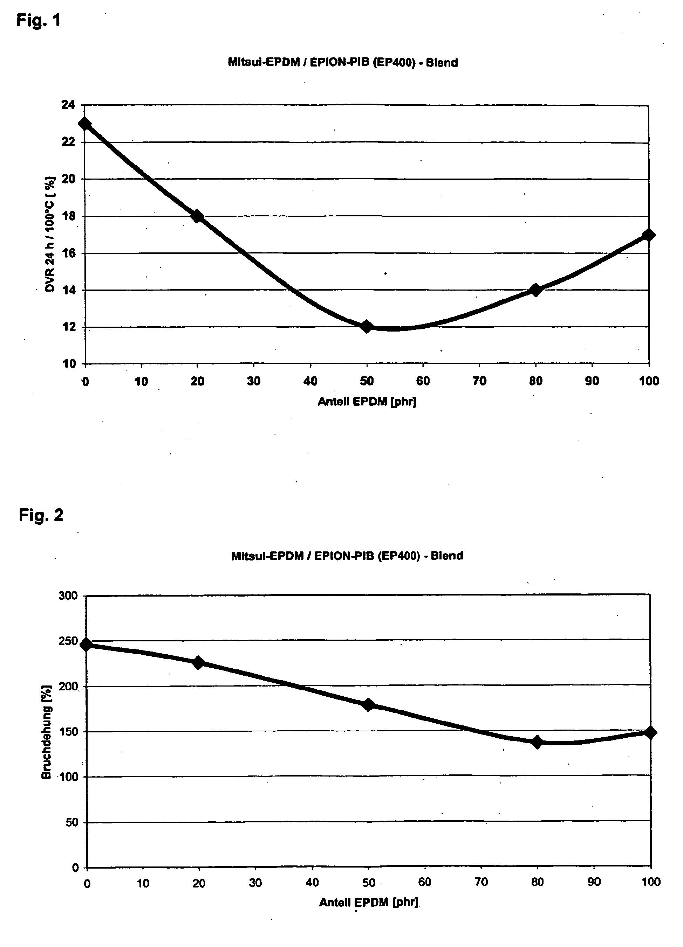

Die Daten der Tabelle I und der Diagramme in den Figuren 1 bis 4 zeigen, wie die Eigenschaften bezüglich Druckverformungsrest, Bruchdehnung, Zugfestigkeit und Gasdurchlässigkeit (Permeation) über das Blenden mit verschiedenen Anteilen an den Kautschuken (A) und (B) gegenüber den Einzelcompounds mit jeweils nur einem Kautschuktyp variiert werden können.

Überraschenderweise durchläuft der Druckverformungsrest (DVR) bei einem 1:1 Verhältnis von Mitsui-EPDM als Kautschuk (A) zu EPION-PIB (EP400) als Kautschuk (B), ein Minimum (siehe Figur 1). Dieses Elastomerblend 2 hat also die geringste bleibende Verformung unter Last im Vergleich zu anderen Mischungsverhältnissen und zu den Einzelcompounds 1 und 2 mit nur einem Kautschuktyp. Allgemein werden unter diesen Bedingungen besonders gute Druckverformungswerte bei den Elastomerblends, die 50 bis 70 phr eines Kautschuks (A) und 30 bis 50 phr eines Kautschuks (B) aufweisen, erreicht.

Die Bruchdehnung nimmt nahezu kontinuierlich mit zunehmendem Anteil an Mitsui-EPDM als Kautschuk (A) ab, hat aber bei einem 1:1 Verhältnis von Mitsui-EPDM als Kautschuk (A) zu EPION-PIB (EP400) als Kautschuk (B) noch vergleichsweise gute Bruchdehnungswerte (siehe Figur 2).

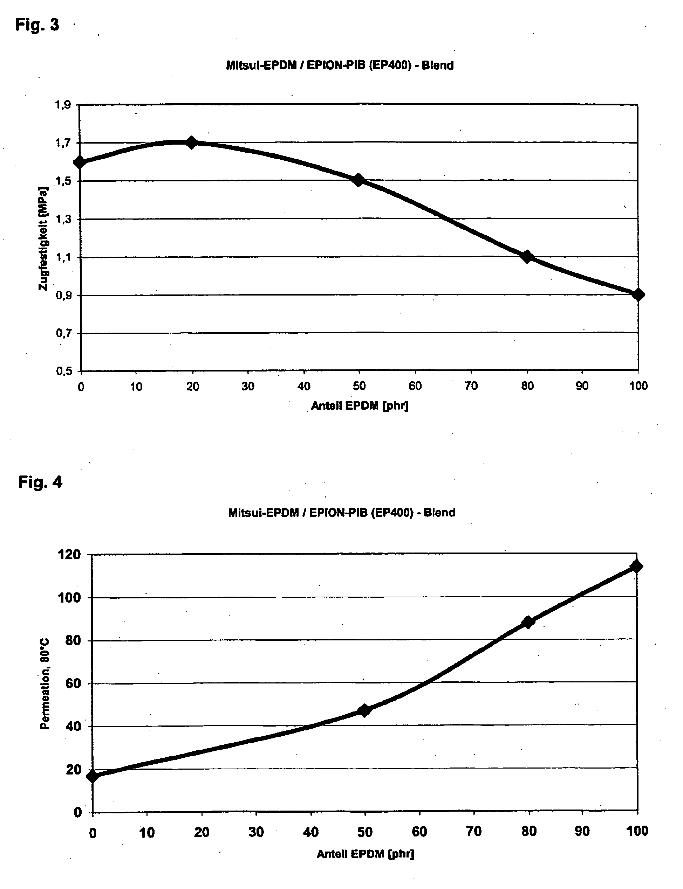

Bei einem Verhältnis von 20 phr Mitsui-EPDM als Kautschuk (A) zu 80 phr EPION-PIB (EP400) als Kautschuk (B) (Elastomerblend 1) ist die Zugfestigkeit am Besten sowohl im Vergleich zu den Zugfestigkeitswerten der Blends mit anderen Verhältnissen als auch zu denen der Einzelcompounds 1 und 2. Auch hier hat das Elastomerblend mit einem 1:1 Verhältnis von Mitsui-EPDM zu EPION-PIB (EP400) (Elastomerblend 2) ebenfalls noch vergleichsweise gute Zugfestigkeitswerte (siehe Figur 3).

Die Durchlässigkeit von Stickstoffgas nimmt mit steigendem Anteil an Mitsui-EPDM zu. Polyisobutylen weist im Gegensatz zu EPDM eine vergleichsweise hohe Gasdichtheit auf. Wie aus der Figur 4 ersichtlich ist, werden bei einem 1:1 Verhältnis von Mitsui-EPDM als Kautschuk (A) zu EPION-PIB (EP400) als Kautschuk (B) noch vergleichsweise geringe Gasdurchlässigkeitswerte erreicht.

**Tabelle II**

| **Beispiel** | Einzelcpd 2 Hysil | Einzelcpd 2 Hysil+ASM | Einzelcpd 2 Perox | Einzelcpd 2 Perox+ASM | **Elastomer-** **blend 1** |
|---|---|---|---|---|---|
| **Kautschuk (A): Mitsui-EPDM [phr]** | 100 | 100 | 100 | 100 | **20** |
| **Kautschuk (B): EPION-PIB) [phr]** | 0 | 0 | 0 | 0 | **80** |
| Hysil-Vernetzer (C): CR-300 [phr] | 4,5 | 4,5 | 0 | 0 | 4,5 |
| Perox-Vernetzer [phr] | 0 | 0 | 4 | 4 | 0 |
| Kat.-System (D): ≈ 450 ppm Kat./Regler [µl] | 56/ 36 | 56/ 36 | 0 | 0 | 56/ 36 |
| Füllstoff (E): Aerosil R8200 [phr] | 30 | 30 | 30 | 30 | 30 |
| Alterungsschutzmittel ASM (G) [phr] | 0 | 2 | 0 | 2 | 0 |
| **DVR [%] in Luft 120°C, 24h** | 36 | 44 | 16 | 27 | **11** |
| **120°C, 70h** | 43 | 53 | 22 | 33 | **10** |
| **120°C, 1008h** | 95 | 85 | 57 | 60 | **50** |
| **150°C, 24h** | 37 | 62 | 23 | 34 | **15** |
| **150°C, 70h** | 67 | 72 | 35 | 57 | **18** |
| **150°C, 336h (****Figur 5****)** | 81 | 77 | 60 | 63 | **48** |
| **Lagerung in Luft 150°C, 1008h relative Änderung Zugfestigkeit [%]** | **-77,3** | **-73,9** | **61,6** | **-38,2** | **-24** |
| **Bruchdehnung [%] (****Figur 6****)** | **-97,9** | **-98,3** | **-99,5** | **-96,2** | **-48,9** |
| | | | | | |
| Herstellung der Prüfplatten | Einzelcpd 2 Hysil (+ASM) | Einzelcpd 2 Perox (+ASM) | | **Elastomer- blend 1(+ASM)** | Flüssigsilikon Hysil |
| Temperatur [°C] | 150 | 180 | | 150 | 150 |
| Zeit [min] | 10 | 10 | | 10 | 10 |

**Tabelle III**

| **Beispiel** | Einzelcpd 2 Hysil | Einzelcpd 2 Hysil+ASM | Einzelcpd 2 Perox | Einzelcpd 2 Perox+ASM | **Elastomer-** **blend 1** |
|---|---|---|---|---|---|
| Härte [Shore A] | | | | | |
| 120°C, 24h | 44 | 41 | 64 | 53 | **32** |
| 120°C, 70h | 47 | 45 | 67 | 55 | **32** |
| 120°C, 1008h | 74 | 59 | 85 | 63 | **40** |
| 150°C, 24h | 47 | 45 | 70 | 57 | **33** |
| 150°C, 70h | 47 | 45 | 77 | 59 | **32** |
| 150°C, 336h | 97 | 66 | 95 | 92 | **43** |

| Zugfestigkeit [MPa] | | | | | |
|---|---|---|---|---|---|
| 120°C, 24h | 4,7 | 4,9 | 3,8 | 4,9 | **2,8** |
| 120°C, 70h | 4,8 | 4,5 | 2,6 | 6 | **2,7** |
| 120°C, 1008h | 0,9 | 6 | 3,1 | 7,6 | **2,8** |
| 150°C, 24h | 4,8 | 5,1 | 1,5 | 6,3 | **2,5** |
| 150°C, 70h | 5,3 | 5,4 | 1,2 | 6,5 | **2,6** |
| 150°C, 1008h | 1 | 1,2 | 8,4 | 3,4 | **1,9** |

| Bruchdehnung [%] | | | | | |
|---|---|---|---|---|---|
| 120°C, 24h | 269 | 285 | 120 | 216 | **222** |
| 120°C, 70h | 241 | 247 | 74 | 227 | **213** |
| 120°C, 1008h | 16 | 175 | 13 | 168 | **170** |
| 150°C, 24h | 226 | 253 | 30 | 200 | **188** |
| 150°C, 70h | 268 | 287 | 13 | 191 | **200** |
| 150°C, 1008h | 8 | 7 | 1 | 10 | **118** |

| Lagerung in Luft relative Änderung Zugfestigkeit [%] | | | | | |
|---|---|---|---|---|---|
| 120°C, 24h | 6,8 | 6,5 | -26,9 | -10,9 | **12** |
| 120°C, 70h | 9,1 | -2,2 | -50 | 9,1 | **8** |
| 120°C, 1008h | 0,9 | 6 | 3,1 | 38,2 | **12** |
| 150°C, 24h | 9,1 | 10,9 | -71,2 | 14,5 | **0** |
| 150°C, 70h | 20,5 | 17,4 | -36,8 | 18,2 | **4** |

| Bruchdehnung [%] | | | | | |
|---|---|---|---|---|---|
| 120°C, 24h | -29,2 | -30,8 | -35,8 | -17,6 | **-3,9** |
| 120°C, 70h | -36,6 | -40 | -60,4 | -13,4 | **-7,8** |
| 120°C, 1008h | -95,8 | -57,5 | -93 | -35,9 | **-26,4** |
| 150°C, 24h | -40,5 | -38,6 | -84 | -23,7 | **-18,6** |
| 150°C, 70h | -29,5 | -30,3 | -93 | -27,1 | **-13,4** |

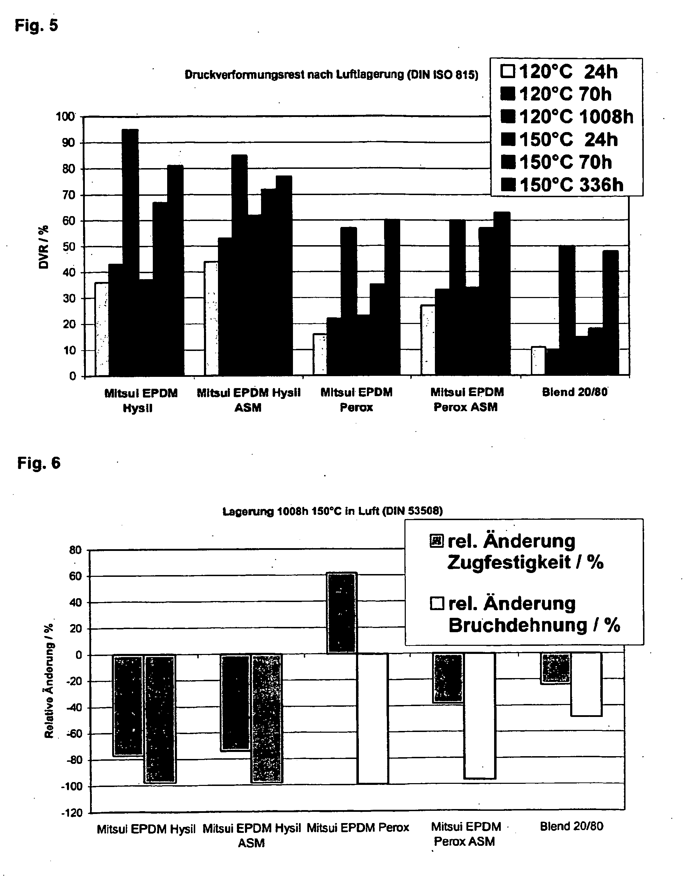

- In Figur 5: ist der Druckverformungsrest (DVR) nach verschiedenen Zeiten bei 120°C bzw. 150°C in Luft und
- in Figur 6: ist die relative Änderung der Zugfestigkeit und die relative Änderung der Bruchdehnung nach 1008h bei 150°C in Luft
gezeigt in Abhängigkeit von dem Elastomerblend 1 mit 20 phr Mitsui-EPDM als Kautschuk (A) und 80 phr EPION-PIB (EP400) als Kautschuk (B) bzw. von dem Einzelcompound 2 (100 phr EPDM) mit dem Hydrosilylierungs-Vernetzer (C) oder mit einem Peroxid-Vernetzer sowohl mit als auch ohne ein phenolisches Alterungsschutzmittel (ASM) als Additiv (G).

Als Peroxidvernetzer für das Mitsui-EPDM wird 2,5-Dimethyl-2,5-Di(tert-Butylperoxy)-hexan von der Firma Arkema Inc. verwendet (Luperox 101 XL-45).

Als phenolisches Alterungsschutzmittel (ASM) wird Irganox 1076 von der Firma Ciba-Geigy eingesetzt.

Die Daten der Tabellen 11 und III sowie die Diagramme in den Figuren 5 und 6 zeigen, dass das Elastomerblend 1 mit 20 phr Mitsui-EPDM als Kautschuk (A) und 80 phr EPION-PIB (EP400) als Kautschuk (B) gegenüber dem über Hydrosilylierung oder Peroxid vernetzten Einzelcompound 2 (100 phr Mitsui-EPDM) wesentlich geringere Druckverformungsrestwerte (DVR) aufweist sowie geringere Veränderungen der Eigenschaften, wie Härte, Bruchdehnung und Zugfestigkeit. Das gleiche gilt überraschenderweise gegenüber dem über Hydrosilylierung oder Peroxid vernetzten Einzelcompound 2 (100 phr Mitsui-EPDM) mit Zusatz von Alterungsschutzmitteln.

Druckverformungswerte größer 50% werden für viele Anwendungsgebiete als nicht akzeptabel angesehen.

Die erfindungsgemäßen Elastomerblends zeigen gegenüber einem Einzelcompound selbst bei hohen Temperaturen bis zu 160°C eine besondere Beständigkeit.

**Tabelle IV**

| **Beispiel** | Einzelcpd 2 Hysil +ASM | Einzelcpd 2 Perox +ASM | **Elastomer** **blend 1** **+ASM** | **Elastomer** **blend 1** | Flüssigsilikon Hysil |
|---|---|---|---|---|---|
| **Kautschuk (A): Mitsui-EPDM [phr]** | 100 | 100 | **20** | **20** | Silikon 50 |
| **Kautschuk (B): EPION-PIB) [phr]** | 0 | 0 | **80** | **80** | Silikon 50 |
| Hysil-Vernetzer (C): CR-300 [phr] | 4,5 | 0 | 4,5 | 4,5 | |
| Perox-Vernetzer [phr] | 0 | 4 | 0 | 0 | |
| Kat.-System (D): ≈ 450 ppm Kat./Regler [µl] | 56/ 36 | 0 | 56/ 36 | 56/ 36 | |
| Füllstoff (E): Aerosil R8200 [phr] | 30 | 30 | 30 | 30 | |
| Alterungsschutzmittel ASM (G) [phr] | 2 | 2 | 2 | 0 | |
| **DVR [%] in 2,5 M CH₃OH/ H₂O/ HCO₂H 90°C, 1008h (****Figur 7****)** | 87 | 58 | **41** | **31** | 100 |

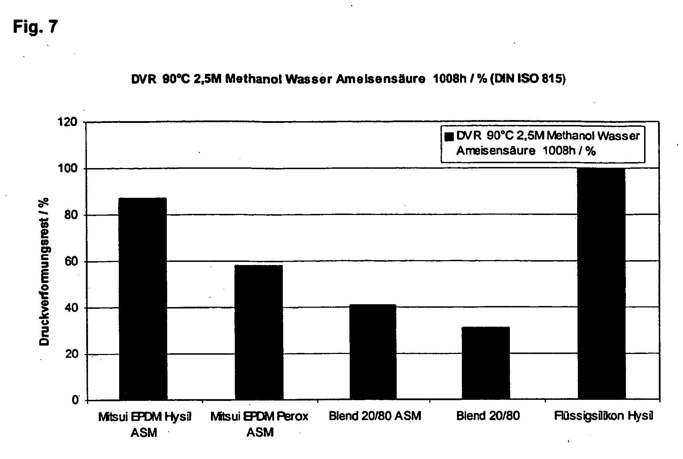

- In Figur 7: ist der Druckverformungsrest (DVR) nach 1008h bei 90°C in 2,5 M Methanol/Wasser/Ameisensäure)
gezeigt in Abhängigkeit von dem Elastomerblend 1 mit 20 phr Mitsui-EPDM als Kautschuk (A) und 80 phr EPION-PIB (EP400) als Kautschuk (B) mit und ohne ein phenolisches Alterungsschutzmittel (ASM) als Additiv (G) bzw. von dem Einzelcompound 2 (100 phr EPDM) mit dem Hydrosilylierungs-Vernetzer (C) oder mit einem Peroxid-Vernetzer sowohl mit als auch ohne ein phenolisches Alterungsschutzmittel (ASM) als Additiv (G) bzw. von einer üblichen hydrosilylierten Silikonmischung (50/50, Härte 40 Shore A).

Als Peroxidvernetzer für das Mitsui-EPDM wird 2,5-Dimethyl-2,5-Di(tert-Butylperoxy)-hexan von der Firma Arkema Inc. verwendet (Luperox 101 XL-45).

Als phenolisches Alterungsschutzmittel (ASM) wird Irganox 1076 von der Firma Ciba-Geigy eingesetzt.

Die Daten der Tabelle IV sowie das Diagramm in Figur 7 zeigen, dass das Elastomerblend 1 mit 20 phr Mitsui-EPDM als Kautschuk (A) und 80 phr EPION-PIB (EP400) als Kautschuk (B) mit und ohne Alterungsschutzmittel (ASM) gegenüber dem über Hydrosilylierung oder Peroxid vernetzten Einzelcompound 2 (100 phr Mitsui-EPDM) bzw. einer üblichen hydrosilylierten Silikonmischung (50/50, Härte 40 Shore A) nach 1008h bei 90°C in einer 2,5 molaren Methanol/Wasserlösung, die mit Ameisensäure angesäuert ist, wesentlich geringere Druckverformungsrestwerte (DVR) aufweist.

Die Elastomerblends weisen im Gegensatz zu den Einzelcompounds und einer üblichen hydrosilylierten Silikonmischung selbst unter den genannten Bedingungen Druckverformungsrestwerte unter 50% auf.

Die Elastomerblends zeichnen sich damit durch eine besondere Beständigkeit in wässrig-sauren Medien, wie wässrig-sauren Alkohollösungen, aus und kommen daher als Material für Dichtungen bzw. Imprägnierungen, Beschichtungen, Membrane oder Klebemassen und/oder Schwingungsdämpfer in diesem Milieu in Betracht. Vorteilhafterweise sind die Elastomerblends insbesondere für einen Einsatz in Direkt-Methanol-Brennstoffzellen (DMFC, direct methanol fuel cell) geeignet.

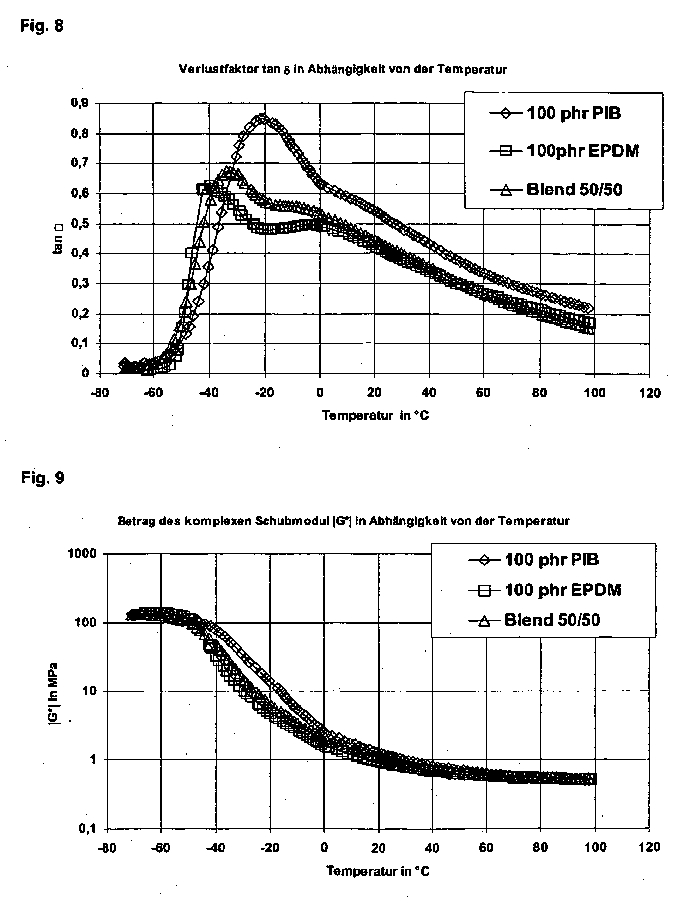

In Figur 8 ist der Verlauf des Verlustfaktors des mechanischen Dämpfungsverhaltens bei dynamischer Schubbeanspruchung (gemessen nach DIN EN ISO/IEC 17025 akkreditiert, Doppelsandwich-Probekörper, Temperaturbereich von -70°C bis + 100°C; Heizrate 1 K/min; Schrittweite 2K; Prüffrequenz 1 Hz; relative Schubverformung ± 2,5%) in Abhängigkeit von der Temperatur für das Elastomerblend 1 mit 20 phr Mitsui-EPDM als Kautschuk (A) und 80 phr EPION-PIB (EP400) als Kautschuk (B) gegenüber dem Einzelcompound 1 (100 phr EPION-PIB) und gegenüber dem Einzelcompound 2 (100 phr Mitsui-EPDM) gezeigt.

In Figur 9 ist der Verlauf des komplexen Schubmoduls G (gemessen nach DIN EN ISO/IEC 17025 akkreditiert, Doppelsandwich-Probekörper, Temperaturbereich -70°C bis + 100°C; Heizrate 1 K/min; Schrittweite 2K; Prüffrequenz 1 Hz; relative Schubverformung ± 2,5%) in Abhängigkeit von der Temperatur für das Elastomerblend 1 mit 20 phr Mitsui-EPDM als Kautschuk (A) und 80 phr EPION-PIB (EP400) als Kautschuk (B) gegenüber dem Einzelcompound 1 (100 phr EPION-PIB) und gegenüber dem Einzelcompound 2 (100 phr Mitsui-EPDM) gezeigt.

Die Diagramme in den Figuren 8 und 9 zeigen, wie sich das mechanische Dämpfungsverhalten bei dynamischer Schubbeanspruchung durch die Wahl der Kautschukzusammensetzung variieren lässt.

Dies ist bedeutsam für die Auslegung dynamisch beanspruchter Bauteile.

Die Elastomerblends zeichnen sich damit, wie oben gezeigt, durch eine besondere Temperatur- und Medienbeständigkeit aus.

**Tabelle V**

| **Beispiel** | Elastomer blend 1 | **Elastomer-blend 1 mit Coagens (F) Nisso** | **Elastomer-blend 1 mit Coagens (F) TAIC** | **Elastomer-blend 3 mit Coagens (F) TAIC** | Elastomer blend 3 |
|---|---|---|---|---|---|
| **Kautschuk (A): Mitsui-EPDM [phr]** | 20 | **20** | **20** | **80** | 80 |
| **Kautschuk (B): EPION-PIB (EP400) [phr]** | 80 | **80** | **80** | **20** | 20 |
| Vernetzer (C): CR-300 [phr] | 4 | **10** | **10** | **10** | 4 |
| Kat.-System (D): Kat./Regler [phr]/[µl] | 0,2 / 35 | 0,2 / 35 | 0,2 / 35 | 0,2 / 35 | 0,2 / 35 |
| Füllstoff (E): Aerosil R8200 [phr] | 20 | **20** | **20** | **20** | 20 |
| **Coagens (F): [phr] Nisso-PB B 3000 TAIC** | | **1** | **1** | **1** | |
| **Härte [Shore A]** | **30** | **38** | **37** | **40** | 31 |
| **DVR 120°C, 24h [%]** | **28** | **39** | **27** | **22** | **36** |
| **Bruchdehnung [%]** | 226 | **170** | **210** | **110** | 137 |
| **Zugfestigkeit [MPa]** | 1,7 | **2,7** | **2,5** | **2,8** | 1,1 |

Als über Hydrosilylierung vernetzbares Coagens (F) wird Triallylisocyanurat (TAIC) der Firma Nordmann, Rassmann GmbH bzw. 1,2-Polybutadien (Nisso-PB B-3000) der Firma Nippon Soda Co., Ltd eingesetzt.

Die Daten der Tabelle V zeigen neben den bisherigen Beispielen von Elastomerblends ohne Coagens beispielhaft an der Verwendung des Coagens Triallylisocyanurat (TAIC) bzw. 1,2-Polybutadien (Nisso-PB B-3000) als Zusatz zu dem Elastomerblend 1 (20 phr EPDM/ 80 phr PIB) und dem Elastomerblend 3 (80 phr EPDM/ 20 phr PIB), wie sich die Zugabe eines über Hydrosilylierung vernetzbaren Coagens (F) auf die mechanischen Eigenschaften auswirkt.

Die Härtewerte werden dabei durch die Zugabe eines Coagens (F) erhöht ebenso wie die Zugfestigkeitswerte.

Der Druckverformungsrest (DVR) wird selbst bei einer Temperatur von 120°C nach 24 Stunden insbesondere durch die Zugabe von Triallylisocyanurat (TAIC) als Coagens (F) noch weiter verbessert.

Dies zeigt, dass für Elastomerblends, die ein Coagens der genannten Art umfassen, im Bereich der mechanische Eigenschaften noch weitere Optimierungsmöglichkeiten bestehen.

## Patentansprüche

1. Verwendung eines Elastomerblends als Material in Brennstoffzellen, insbesondere der Direkt-Methanol-Brennstoffzelle, wobei das Elastomerblend
einen Kautschuk (A) mit mehr als zwei Vinylgruppen, ausgewählt aus Ethylen-Propylen-Dien-Kautschuk (EPDM) mit bevorzugt einem Norbomenderivat mit einer Vinylgruppe, bevorzugt mit 5-Vinyl-2-norbonen, als Dien, aus Isobutylen-Isopren-Divinylbenzol-Kautschuk (IIR-Terpolymer), Isobutylen-Isopren-Kautschuk (IIR), Butadien-Kautschuk (BR), Styrol-Butadien-Kautschuk (SBR), Styrol-Isopren-Kautschuk (SIR), Isopren-Butadien-Kautschuk (IBR), Isopren-Kautschuk (IR), Acrylnitril-Butadien-Kautschuk (NBR), Chloropren-Kautschuk (CR), Acrylat-Kautschuk (ACM) oder
teilweise hydriertem Kautschuk aus Butadien-Kautschuk (BR), Styrol-Butadien-Kautschuk (SBR), Isopren-Butadien-Kautschuk (IBR), Isopren-Kautschuk (IR), Acrylnitril-Butadien-Kautschuk (NBR) oder aus funktionalisiertem Kautschuk, wie zum Beispiel mit Maleinsäureanhydrid oder -derivaten, oder aus mit Vinylgruppen funktionalisiertem Perfluoropolyether-Kautschuk,
mindestens einen anderen Kautschuk (B), der ein Polyisobutylen-Kautschuk (PIB) mit zwei Vinylgruppen ist,
als Vernetzer (C) ein Hydrosiloxan oder ein Gemisch aus mehreren Hydrosiloxanen , die im Mittel mindestens zwei SiH-Gruppen pro Molekül aufweisen,
ein Hydrosilylierungs-Katalysatorsystem (D) und
mindestens einen Füllstoff (E) umfasst.

2. Verwendung nach Anspruch 1, wobei das Elastomerblend zusätzlich ein über Hydrosilylierung vernetzbares Coagens (F), ausgewählt aus 2,4,6-Tris(allyloxy)-1,3,5-triazin (TAC), Triallylisocyanurat (TAIC), 1,2-Polybutadien, 1,2-Polybutadienderivaten, Allylethem, insbesondere Trimethylolpropan-diallylether, Allylalkoholestem, insbesondere Diallylphtalaten, Diacrylaten, Triacrylaten, insbesondere Trimethylpropantriacrylat, Dimethacrylaten und/oder Trimethacrylaten, insbesondere Trimethylolpropantrimethacrylat (TRIM), Triallylphosphonsäureestem und/oder Butadien-Styrol-Copolymeren mit mindestens zwei über Hydrosilylierung an die Kautschuke (A) und/oder (B) anbindenden funktionellen Gruppen,
und/oder
mindestens ein Additiv (G), ausgewählt aus Alterungsschutzmitteln, Antioxidantien, Ozonschutzmitteln, Flammschutzmitteln, Hydrolyseschutzmitteln, Haftvermittlern, Entformungsmitteln bzw. Mitteln zur Reduzierung der Bauteilklebrigkeit, Farbstoffen und/oder Pigmenten, Weichmachern und/oder Verarbeitungshilfen, aufweist.

3. Verwendung nach einem der vorhergehenden Ansprüche, wobei das Elastomerblend
- 20 bis 95 phr des Kautschuks (A),
- 80 bis 5 phr des zumindest einen Kautschuks (B),
- eine Menge des Vernetzers (C), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E),
für nicht magnetische Füllstoffe bevorzugt 10 bis 200 phr,
für magnetische oder magnetisierbare bevorzugt 200 bis 600 phr umfasst.

4. Verwendung nach einem der vorhergehenden Ansprüche, wobei das Elastomerblend
- 50 bis 95 phr des Kautschuks (A),
- 50 bis 5 phr des zumindest einen Kautschuks (B),
- eine Menge des Vernetzers (C), wobei das Verhältnis der SiH-Gruppen zu den über Hydrosilylierung vernetzbaren funktionellen Gruppen bei 0,2 bis 20 liegt, bevorzugt bei 0,5 bis 5, besonders bevorzugt bei 0,8 bis 1,2,
- 0,05 bis 100000 ppm, bevorzugt 0,1 bis 5000 ppm des Hydrosilylierungs-Katalysatorsystems (D) und
- 5 bis 800 phr des zumindest einen Füllstoffs (E),
für nicht magnetische Füllstoffe bevorzugt 10 bis 200 phr,
für magnetische oder magnetisierbare bevorzugt 200 bis 600 phr umfasst.

5. Verwendung nach einem der Ansprüche 2 bis 4, wobei das Elastomerblend
- 0,1 bis 30 phr, bevorzugt 1 bis 10 phr, des Coagens (F) und/oder
- 0,1 bis 20 phr des zumindest einen Additivs (G) umfasst.

6. Verwendung nach einem der vorhergehenden Ansprüche, wobei das Elastomerblend
50 bis 70 phr des Kautschuks (A) und 50 bis 30 phr des Kautschuks (B) umfasst.

7. Verwendung nach einem der vorhergehenden Ansprüche, wobei der Kautschuk (A)
ausgewählt ist aus Ethylen-Propylen-Dien-Kautschuk (EPDM) mit einer Vinylgruppen im Dien und der Kautschuk (B) ausgewählt ist aus Polyisobutylen (PIB) mit zwei Vinylgruppen.

8. Verwendung nach einem der vorhergehenden Ansprüche, wobei das mittlere Molekulargewicht der Kautschuke (A) und (B) zwischen 5000 und 100000 g/mol, bevorzugt zwischen 5000 und 60000 g/mol beträgt.

9. Verwendung nach einem der vorhergehenden Ansprüche, wobei der Vernetzer (C)
ausgewählt ist aus
- eine SiH-enthaltende Verbindung der Formel (I):
wobei R¹ für eine gesättigte Kohlenwasserstoffgruppe oder für eine aromatische Kohlenwasserstoffgruppe steht, die monovalent ist, 1 bis 10 Kohlenstoffatome hat und substituiert oder unsubstituiert ist, wobei a für ganzzahlige Werte von 0 bis 20 und b für ganzzahlige Werte von 0 bis 20 steht, sowie R² für eine divalente organische Gruppe mit 1 bis 30 Kohlenstoffatomen oder Sauerstoffatomen steht,
- eine SiH-enthaltende Verbindung der Formel (II): 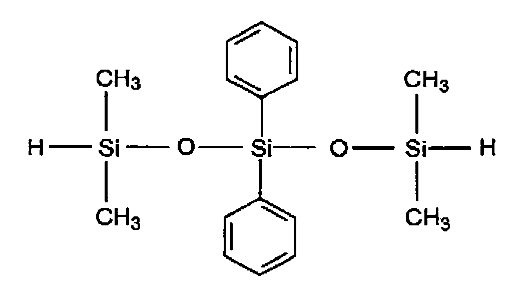 und/oder
- eine SiH-enthaltende Verbindung der Formel (III): 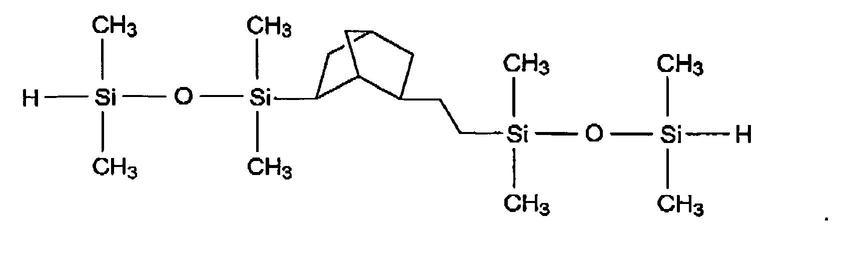
- bevorzugt aus Poly(dimethylsiloxan-co-methylhydro-siloxan), Tris(dimethylsilyoxy)phenylsilan, Bis(dimethylsilyloxy)diphenylsilan, Polyphenyl(dimethylhydrosiloxy)-siloxan, Methylhydrosiloxanphenylmethylsiloxan-Copolymer, Methylhydrosiloxanalkylmethylsiloxan-Copolymer, Polyalkylhydrosiloxan, Methylhydrosiloxan-diphenylsiloxan-alkylmethylsiloxan-Copolymer und/oder aus Polyphenylmethylsiloxan-methylhydrosiloxan.

10. Verwendung nach einem der vorhergehenden Ansprüche, wobei das Hydrosilylierungs-Katalysatorsystem (D)
ausgewählt ist aus Hexachloroplatinsäure, Platin(0)-1,3-Divinyl-1,1,3,3,-tetramethyldisiloxan-Komplex, Dichloro(1,5-cyclooctadien)platin(II), Dichloro(dicyclopentadienyl)platin(II), Tetrakis(triphenylphosphin)platin(0), Chloro(1,5-cyclooctadien)rhodium(I)dimer, Chlorotris(triphenylphosphin)rhodium(I) und/oder Dichtoro(1,5-cyclooctadien)paliadium(II) gegebenenfalls in Kombination mit einem Kinetikregler ausgewählt aus Dialkylmaleat, insbesondere Dimethylmaleat, 1,3,5,7-Tetramethyl-1,3,5,7-tetravinylcyclosiloxan, 2-Methyl-3-butin-2-ol und/oder 1-Ethinylcyclohexanol.

11. Verwendung nach einem der vorhergehenden Ansprüche, wobei der zumindest eine Füllstoff (E)
ausgewählt ist aus Ruß, Graphit, Kieselsäure, Silikat, Metalloxid, Metallhydroxid, Carbonat, Glaskugeln, Fasern und/oder organischem Füllstoff.

12. Verwendung nach einem der Ansprüche 1 bis 11 als Material von Dichtungen bzw. Imprägnierungen, Beschichtungen, Membranen oder Klebemassen von Schläuchen, Ventilen, Pumpen, Filtern, Befeuchtem, Reformern, Vorratsgefäßen (Tanks), Schwingungsdämpfern, für Beschichtungen von Geweben und/oder Vliesstoffen.

## Claims

1. Use of an elastomer blend as a material in fuel cells, more particularly a direct methanol fuel cell, wherein the elastomer blend comprises a rubber (A) having more than two vinyl groups selected from ethylene-propylene-diene monomer rubber (EPDM) having preferably a norbornene derivative having a vinyl group, preferably having 5-vinyl-2-norbornene, as diene monomer, from isobutylene-isoprene-divinylbenzene rubber (IIR terpolymer), isobutylene-isoprene rubber (IIR), butadiene rubber (BR), styrene-butadiene rubber (SBR), styrene-isoprene rubber (SIR), isoprene-butadiene rubber (IBR), isoprene rubber (IR), acrylonitrile-butadiene rubber (NBR), chloroprene rubber (CR), acrylate rubber (ACM) or
partially hydrogenated rubber made of butadiene rubber (BR), styrene-butadiene rubber (SBR), isoprene-butadiene rubber (IBR), isoprene rubber (IR), acrylonitrile-butadiene rubber (NBR) or of rubber functionalized with, for example, maleic anhydride or maleic anhydride derivatives, or of perfluoropolyether rubber functionalized with vinyl groups,
at least one other rubber (B) which is a polyisobutylene rubber (PIB) having two vinyl groups,
a crosslinker (C) comprising a hydrosiloxane or a mixture of two or more hydrosiloxanes which on average have at least two SiH groups per molecule, a hydrosilylation catalyst system (D), and
at least one filler (E).

2. Use according to Claim 1, wherein the elastomer blend further comprises a hydrosilylation-crosslinkable co-agent (F) selected from 2,4,6-tris(allyloxy)-1,3,5-trazine (TAC), triallyl isocyanurate (TAIC), 1,2-polybutadiene, 1,2-polybutadiene derivatives, allyl ethers, more particularly trimethylolpropane diallyl ether, allyl alcohol esters, more particularly diallyl phthalates, diacrylates, triacrylates, more particularly trimethylpropane triacrylate, dimethacrylates and/or trimethacrylates, more particularly trimethylolpropane trimethacrylate (TRIM), triallyl phosphonic esters and/or butadiene-styrene copolymers having at least two functional groups binding to the rubbers (A) and/or (B) via hydrosilylation,
and/or
at least one additive (G) selected from anti-ageing agents, antioxidants, ozone protection agents, flame retardants, hydrolysis protection agents, adhesion promoters, mould release agents or agents for reducing structural-component tackiness, dyes and/or pigments, plasticizers and/or processing aids.

3. Use according to either preceding claim, wherein the elastomer blend comprises
- 20 to 95 phr of the rubber (A),
- 80 to 5 phr of the at least one rubber (B),
- an amount of the crosslinker (C) wherein the ratio of the SiH groups to the hydrosilylation-crosslinkable functional groups is in the range from 0.2 to 20, preferably in the range from 0.5 to 5 and more preferably in the range from 0.8 to 1.2,
- 0.05 to 100 000 ppm, preferably 0.1 to 5000 ppm of the hydrosilylation catalyst system (D), and
- 5 to 800 phr of the at least one filler (E), preferably 10 to 200 phr for nonmagnetic fillers and
preferably 200 to 600 phr for magnetic or magnetizable fillers.

4. Use according to any preceding claim, wherein the elastomer blend comprises
- 50 to 95 phr of the rubber (A),
- 50 to 5 phr of the at least one rubber (B),
- an amount of the crosslinker (C) wherein the ratio of the SiH groups to the hydrosilylation-crosslinkable functional groups is in the range from 0.2 to 20, preferably in the range from 0.5 to 5 and more preferably in the range from 0.8 to 1.2,
- 0.05 to 100 000 ppm, preferably 0.1 to 5000 ppm of the hydrosilylation catalyst system (D), and
- 5 to 800 phr of the at least one filler (E), preferably 10 to 200 phr for nonmagnetic fillers and
preferably 200 to 600 phr for magnetic or magnetizable fillers.

5. Use according to any one of Claims 2 to 4, wherein the elastomer blend comprises
- 0.1 to 30 phr, preferably 1 to 10 phr of the co-agent (F), and/or
- 0.1 to 20 phr of the at least one additive (G).

6. Use according to any preceding claim, wherein the elastomer blend comprises 50 to 70 phr of the rubber (A) and 50 to 30 phr of the rubber (B).

7. Use according to any preceding claim, wherein the rubber (A) is selected from ethylene-propylene-diene monomer (EPDM) rubber having a vinyl group in the diene monomer, and the rubber (B) is selected from polyisobutylene (PIB) having two vinyl groups.

8. Use according to any preceding claim, wherein the average molecular weight of the rubbers (A) and (B) is between 5000 and 100 000 g/mol, preferably between 5000 and 60 000 g/mol.

9. Use according to any preceding claim, wherein the crosslinker (C) is selected from
- an SiH-containing compound of formula (I): 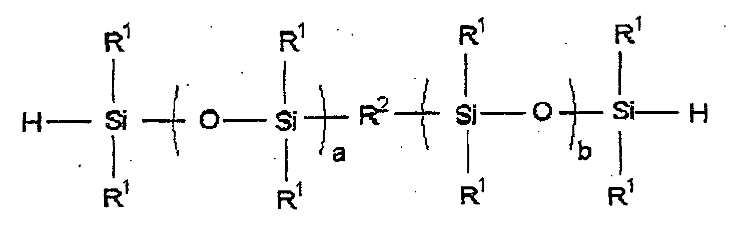 where R¹ represents a saturated hydrocarbyl group or an aromatic hydrocarbyl group which is monovalent, has 1 to 10 carbon atoms and is substituted or unsubstituted, where a represents integers ranging from 0 to 20 and b represents integers ranging from 0 to 20, and also R² represents a divalent organic group having 1 to 30 carbon atoms or oxygen atoms,
- an SiH-containing compound of formula (II): 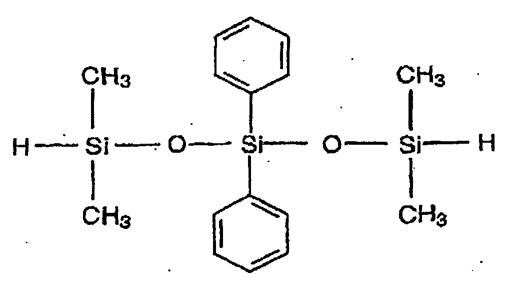 and/or
- an SiH-containing compound of formula (III): 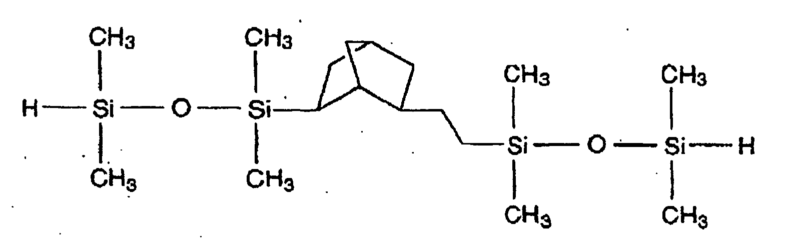
- preferably from poly(dimethylsiloxane-comethylhydrosiloxane), tris(dimethylsilyloxy)phenylsilane, bis(dimethylsilyloxy)diphenylsilane, polyphenyl(dimethylhydrosiloxy)siloxane, methylhydrosiloxane-phenylmethylsiloxane copolymer, methylhydrosiloxane-alkylmethylsiloxane copolymer,
polyalkylhydrosiloxane, methylhydrosiloxane-diphenylsiloxane-alkylmethylsiloxane copolymer
and/or from polyphenylmethylsiloxanemethyl-hydrosiloxane.

10. Use according to any preceding claim, wherein the hydrosilylation catalyst system (D) is selected from
hexachloroplatinic acid, platinum(0)-1,3-divinyl-1,1,3,3-tetramethyldisiloxane complex, dichloro(1,5-cyclooctadiene)platinum(II), dichloro(dicyclopentadienyl)platinum(II), tetrakis(triphenylphosphine)platinum(0), chloro(1,5-cyclooctadiene)rhodium(I) dimer, chlorotris(triphenylphsophine)rhodium(I) and/or dichloro(1,5-cyclooctadiene)palladium(II) optionally combined with a kinetic regulator selected from dialkyl maleate, more particularly dimethyl maleate, 1,3,5,7-tetramethyl-1,3,5,7-tetravinylcyclosiloxane, 2-methyl-3-butyn-2-ol and/or 1-ethynylcyclohexanol.

11. Use according to any preceding claim, wherein the at least one filler (E) is selected from carbon black, graphite, silica, silicate, metal oxide, metal hydroxide, carbonate, glass balls, fibres and/or organic filler.

12. Use according to any one of Claims 1 to 11 as a material for seals or impregnations, coatings, membranes or adhesive compositions for hoses, valves, pumps, filters, humidifiers, reformers, stock reservoir vessels (tanks), vibration absorbers, for coatings on wovens and/or nonwovens.

## Revendications

1. Utilisation d'un mélange d'élastomères comme matériau dans des piles à combustible, en particulier la pile à combustible à méthanol direct, où le mélange d'élastomères comprend
un caoutchouc (A) présentant plus de deux groupes vinyle, choisi parmi le caoutchouc d'éthylène-propylène-diène (EPDM) avec de préférence un dérivé de norbornène présentant un groupe vinyle, de préférence avec du 5-vinyl-2-norbornène, comme diène, le caoutchouc d'isobutylène-isoprène-divinylbenzène (terpolymère IIR), le caoutchouc d'isobutylène-isoprène (IIR), le caoutchouc de butadiène (BR), le caoutchouc de styrène-butadiène (SBR), le caoutchouc de styrène-isoprène (SIR), le caoutchouc d'isoprène-butadiène (IBR), le caoutchouc d'isoprène (IR), le caoutchouc d'acrylonitrile-butadiène (NBR), le caoutchouc de chloroprène (CR), le caoutchouc d'acrylate (ACM) ou
du caoutchouc partiellement hydrogéné constitué du caoutchouc de butadiène (BR), du caoutchouc de styrène-butadiène (SBR), du caoutchouc d'isoprène-butadiène (IBR), du caoutchouc d'isoprène (IR), du caoutchouc d'acrylonitrile-butadiène (NBR) ou du caoutchouc fonctionnalisé, tel que par exemple avec de l'anhydride de l'acide maléique ou ses dérivés ou le caoutchouc de perfluoropolyéther fonctionnalisé avec des groupes vinyle,
au moins un autre caoutchouc (B), qui est un caoutchouc de polyisobutylène (PIB) comprenant deux groupes vinyle,
comme réticulant (C) un hydrosiloxane ou un mélange de plusieurs hydrosiloxanes, qui présentent en moyenne au moins deux groupes SiH par molécule,
un système de catalyseur d'hydrosilylation (D) et
au moins une charge (E).

2. Utilisation selon la revendication 1, où le mélange d'élastomères présente en outre un co-agent (F) réticulable via une hydrosilylation, choisi parmi la 2,4,6-tris(allyloxy)-1,3,5-triazine (TAC), le triallylisocyanurate (TAIC), le 1,2-polybutadiène, les dérivés de 1,2-polybutadiène, les allyléthers, en particulier le triméthylolpropanediallyléther, les esters d'alcools allyliques, en particulier les phtalates de diallyle, les diacrylates, les triacrylates, en particulier le triacrylate de triméthylpropane, les diméthacrylates et/ou les triméthacrylates, en particulier le triméthacrylate de triméthylolpropane (TRIM), les esters de l'acide triallylphosphonique et/ou les copolymères de butadiène-styrène présentant au moins deux groupes fonctionnels pouvant être liés par hydrosilylation aux caoutchoucs (A) et/ou (B), et/ou
au moins un additif (G), choisi parmi les agents de protection contre le vieillissement, les antioxydants, les agents de protection contre l'ozone, les agents ignifuges, les agents de protection contre l'hydrolyse, les promoteurs d'adhérence, les agents de démoulage ou les agents pour la réduction de l'adhésivité des pièces, les colorants et/ou les pigments, les plastifiants et/ou les adjuvants de transformation.

3. Utilisation selon l'une quelconque des revendications précédentes, où le mélange d'élastomères comprend
- 20 à 95 parties par cent parties de caoutchouc (A),
- 80 à 5 parties par cent parties dudit au moins un caoutchouc (B),
- une quantité de réticulant (C), où le rapport des groupes SiH aux groupes fonctionnels réticulables par hydrosilylation est de 0,2 à 20, de préférence de 0,5 à 5, de manière particulièrement préférée de 0,8 à 1,2,
- 0,05 à 100 000 ppm, de préférence 0,1 à 5000 ppm du système de catalyseur d'hydrosilylation (D) et
- 5 à 800 parties par cent parties de ladite au moins une charge (E), pour des charges non magnétiques de préférence 10 à 200 parties par cent parties, pour des charges magnétiques ou magnétisables de préférence 200 à 600 parties par cent parties.

4. Utilisation selon l'une quelconque des revendications précédentes, où le mélange d'élastomères comprend
- 50 à 95 parties par cent parties de caoutchouc (A),
- 50 à 5 parties par cent parties dudit au moins un caoutchouc (B),
- une quantité de réticulant (C), où le rapport des groupes SiH aux groupes fonctionnels réticulables par hydrosilylation est de 0,2 à 20, de préférence de 0,5 à 5, de manière particulièrement préférée de 0,8 à 1,2,
- 0,05 à 100 000 ppm, de préférence 0,1 à 5000 ppm du système de catalyseur d'hydrosilylation (D) et
- 5 à 800 parties par cent parties de ladite au moins une charge (E), pour des charges non magnétiques de préférence 10 à 200 parties par cent parties, pour des charges magnétiques ou magnétisables de préférence 200 à 600 parties par cent parties.

5. Utilisation selon l'une quelconque des revendications 2 à 4, où le mélange d'élastomères comprend
- 0,1 à 30 parties par cent parties, de préférence 1 à 10 parties par cent parties, du co-agent (F) et/ou
- 0,1 à 20 parties par cent parties d'au moins un additif (G).

6. Utilisation selon l'une quelconque des revendications précédentes, où le mélange d'élastomères comprend
- 50 à 70 parties par cent parties de caoutchouc (A) et 50 à 30 parties par cent parties de caoutchouc (B).

7. Utilisation selon l'une quelconque des revendications précédentes, où le caoutchouc (A) est choisi parmi le caoutchouc d'éthylène-propylène-diène (EPDM) avec un groupe vinyle dans le diène et le caoutchouc (B) est choisi parmi le polyisobutylène (PIB) présentant deux groupes vinyle.

8. Utilisation selon l'une quelconque des revendications précédentes, où le poids moléculaire moyen des caoutchoucs (A) et (B) est situé entre 5000 et 100 000 g/mole, de préférence entre 5000 et 60 000 g/mole.

9. Utilisation selon l'une quelconque des revendications précédentes, où le réticulant (C) est choisi parmi
- un composé contenant SiH de formule (I) : 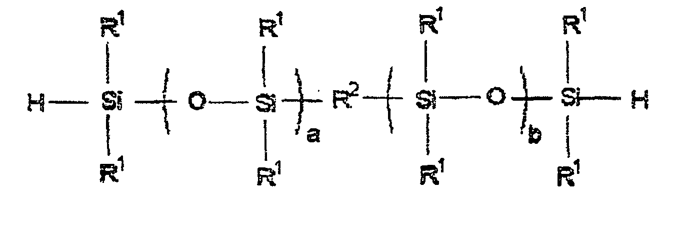 où R¹ représente un groupe hydrocarboné saturé ou un groupe hydrocarboné aromatique qui est monovalent, qui comprend 1 à 10 atomes de carbone et qui est substitué ou non substitué, où a représente des nombres entiers de 0 à 20 et b représente des nombres entiers de 0 à 20, et R² représente un groupe organique divalent comprenant 1 à 30 atomes de carbone ou atomes d'oxygène,
- un composé contenant SiH de formule (II) : 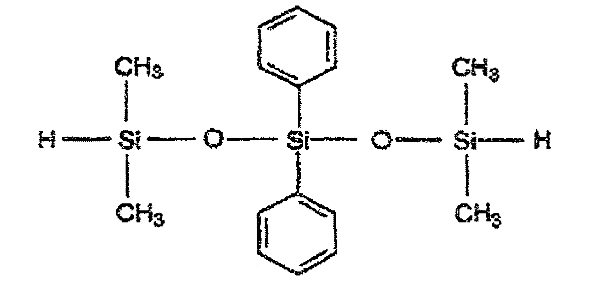 et/ou
- un composé contenant SiH de formule (III) : 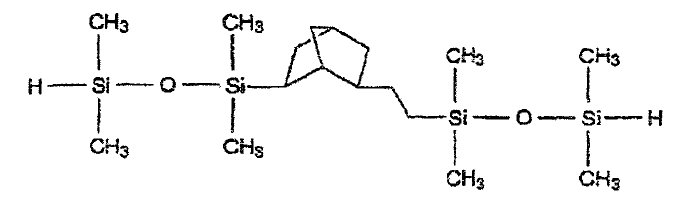
- de préférence parmi le poly(diméthylsiloxane-cométhylhydrosiloxane), le tris(diméthylsilyloxy)phénylsilane, le bis(diméthylsilyloxy)diphénylsilane, le polyphényl(diméthylhydrosiloxy)-siloxane, le copolymère de méthylhydrosiloxane-phénylméthylsiloxane, le copolymère de méthylhydrosiloxane-alkylméthylsiloxane, le polyalkylhydrosiloxane, le copolymère de méthylhydrosiloxane-diphénylsiloxane-alkylméthylsiloxane et/ou le polyphénylméthylsiloxane-méthylhydrosiloxane.

10. Utilisation selon l'une quelconque des revendications précédentes, où le système de catalyseur d'hydrosilylation (D) est choisi parmi l'acide hexachloroplatinique, le complexe platine(0)-1,3-divinyl-1,1,3,3,-tétraméthyldisiloxane, le dichloro(1,5-cyclooctadiène)-platine (II), le dichloro(dicyclopentadiényl)-platine (II), le tétrakis(triphénylphosphine)-platine (0), le dimère de chloro(1,5-cyclooctadiène)-rhodium (I), le chlorotris(triphénylphosphine)-rhodium (I) et/ou le dichloro(1,5-cyclooctadiène)-palladium (II) le cas échéant en combinaison avec un régulateur de la cinétique choisi parmi le maléate de dialkyle, en particulier le maléate de diméthyle, le 1,3,5,7-tétraméthyl-1,3,5,7-tétravinylcyclosiloxane, le 2-méthyl-3-butyn-2-ol et/ou le 1-éthynylcyclohexanol.

11. Utilisation selon l'une quelconque des revendications précédentes, où ladite au moins une charge (E) est choisie parmi une suie, le graphite, une silice, un silicate, un oxyde de métal, un hydroxyde de métal, un carbonate, des billes de verre, des fibres et/ou une charge organique.

12. Utilisation selon l'une quelconque des revendications 1 à 11 comme matériau pour des joints ou des imprégnations, des revêtements, des membranes ou des masses adhésives de flexibles, de soupapes, de pompes, de filtres, d'humidificateurs, de reformeurs, de réservoirs (citernes), d'amortisseurs, pour des revêtements de tissus et/ou de non-tissés.
